# EUROPÄISCHE PATENTSCHRIFT

(11) **EP 2 932 138 B1**
(45) Veröffentlichungstag und Bekanntmachung des Hinweises auf die Patenterteilung: **13.06.2018**
(21) Anmeldenummer: 13848107.2
(22) Anmeldetag: 10.12.2013
(51) Int. Cl.: F16J 13/14

(54) **VERSCHLUSSANORDNUNG FÜR EINE ÖFFNUNG**
CLOSURE ASSEMBLY FOR AN OPENING
DISPOSITIF DE FERMETURE D'UN ORIFICE

(30) Priorität: 12.12.2012 DE 102012112193
(43) Veröffentlichungstag der Anmeldung: 21.10.2015
(73) Patentinhaber: NETZSCH-Feinmahltechnik GmbH, 95100 Selb (DE)
(72) Erfinder: MOESCHL, Holger, Selb (DE); WEILAND, Lars-Peter, 95173 Schönwald (DE)
(74) Vertreter: Benninger, Johannes
(86) Internationale Anmeldenummer: PCT/DE2013/000786
(87) Internationale Veröffentlichungsnummer: WO 2014/094707

(56) Entgegenhaltungen:
- EP-A1- 1 956 274
- US-A- 2 527 053

## Beschreibung

Die Erfindung betrifft eine Anordnung und Mittel zum Verschließen einer Öffnung, insbesondere zum Verschließen einer Bohrung für ein Befestigungselement in einer Mahlkammer einer Rührwerksmühle, wobei die Öffnung zur Aufnahme eines Verschlusselements oder einer Verschlusseinheit einen radial erweiterten Endabschnitt aufweist. Die Erfindung betrifft weiterhin ein Sicherheitssiegel zum Verhindern eines unbefugten Lösens eines Befestigungselements sowie eine Schutzeinrichtung um Verschleiß entgegenzuwirken mit Hilfe der erfindungsgemäßen Anordnung und Mittel.

Bei der Befestigung oder dem Verbinden, beispielsweise von Maschinenteilen, ist es oftmals erforderlich, die Befestigungsbeziehungsweise Verbindungsteile zu versenken, so dass das Befestigungselement oder Teile des Befestigungselements nicht über die Oberfläche eines Maschinenteils hinausragen. Insbesondere bei Maschinen und Geräten mit bewegten Teilen können so Kollisionen zwischen den Teilen verhindert werden. Beispielsweise besitzen Rührwerksmühlen eine zylindrische, zur Aufnahme von Mahlkörpern dienende Mahlkammer. In der Mahlkammer ist ein um die Kammerachse drehbares Rührwerk angeordnet. Die in der Mühle befindlichen Mahlkörper werden im Betriebszustand der Mühle radial zur Rührwelle befördert und dadurch das durch die Mahlkammer hindurch geleitete Mahlgut durch Stoß- und Scherkräfte zerkleinert beziehungsweise dispergiert. Die Mahlkörper und auch das Mahlgut in der Mahlkammer führen zum Verschleiß, insbesondere der hervorstehenden Teile wie beispielsweise hervorstehende Befestigungselemente in der Kammer. Mit dem Versenken der Befestigungselemente kann deren Verschleiß verringert werden.

Nachteilig bei dieser Lösung ist jedoch, dass sich in den Bohrungen für die Befestigungsteile Mahlgut und Mahlkörper ansammeln, was einerseits zum Verschleiß bis hin zur Zerstörung der Befestigungsteile führt und andererseits aber auch die Lösbarkeit der Befestigungsteile beeinträchtigen kann. Besonders bei aggressiven Medien können die Befestigungselemente schnell korrodieren. Bei der Verwendung einer Befestigungsschraube beispielsweise lässt sich die Schraube aufgrund der Korrosion nur schwer oder gar nicht mehr herausdrehen. Die Schraubverbindung muss dann beispielsweise durch aufwendiges Aufbohren gelöst werden. Weiterhin kann es vorkommen, dass sich das Mahlgut nach dem Mahlvorgang nicht mehr rückstandsfrei aus den Senklöchern entfernen lässt. Auch das erschwert oder verhindert ein Lösen der Verbindung und ein vollständiges Reinigen beim Produktwechsel.

Um diesem Nachteil entgegen zu wirken, wurden in der Vergangenheit Lösungen vorgeschlagen, welche vorsehen, die Öffnung für das Befestigungselement zu verschließen. Beispielsweise ist in der DE 31 09 203 A1 ein Verfahren zum Verschließen einer Bohrung für eine Befestigungsschraube in montierten Führungsleisten bekannt. Die Bohrungen werden dabei mit einer aushärtbaren Vergußmasse verfüllt und dann eine in die Bohrung passende Verschlußscheibe aus gleichem Material eingesetzt. Nachteilig bei diesem Verfahren ist einerseits die Notwendigkeit, eine geeignete Vergußmasse bereitzustellen und diese auch entsprechend dosiert in das Bohrloch einzubringen. Andererseits besteht die Gefahr, dass die Verschlussscheibe schräg eingesetzt wird, wodurch sich wiederum Verunreinigungen absetzen können.

Eine Führungsschiene einer Linearführung ist in der DE 10 2004 001 944 A1 offenbart, die mit Bohrungen zur Aufnahme jeweils einer Schraube versehen ist, wobei die Bohrungen durch Verschlusskappen verschließbar sind und an ihrer von der Bohrung abgewandten Kopffläche mit einer Dünnschichtverchromung versehen ist. Die Chromschicht soll dabei einen erhöhten Verschleiß verhindern, wodurch Verunreinigungen auf der Kopffläche der Verschlusskappe gelangen können und diese beschädigen. Die Verschlusskappe ist in eine zylindrische Erweiterung der Bohrung eingepresst. Hierbei besteht die Gefahr, dass beim Einpressen eine unerwünschte Verformung des Verschlussstopfens auftreten kann. Wegen der dünnen Chromschicht (einige µm Schichtdicke) und deren spröden Materialeigenschaften kann diese von der Verschlusskappe abplatzen. Zudem kann es wegen der Verformung zur Verringerung der Haltbarkeit der Verbindung zwischen Bohrloch und Verschlusskappe und erhöhtem Verschleiß kommen.

In der europäischen Patentschrift EP 01 201 632.5 ist eine Sicherheitsverriegelung für eine Schraube offenbart, bei der ein Schutzkappenteil an einem Gehäuseteil über ein Scharnier befestigt und die Verriegelung innerhalb einer Aussparung platziert ist. Die Verriegelung und die Aussparung können dabei so ausgestaltet sein, dass die Verriegelung mit der Oberfläche eines Befestigungsteils plan abschließt. Zur Verriegelung wird ein Verriegelungsdraht an eine zweite Öffnung über den Schutzkappenteil angebracht, was insbesondere zu einer bauformbedingten nachteiligen Erhöhung führt.

In der Offenlegungsschrift EP 1956274 A1 wird ein Verschlussmittel beschrieben, dass eine Öffnung zu einem inneren Fluid verschließt. Die Öffnung weist zur Aufnahme eines Verschlusselements einen radial erweiterten Endabschnitt auf. im Bereich des Endabschnitts ist mindestens eine Ausnehmung radial gebildet und das Verschlusselement steht über Verbindungsmittel mit der Ausnehmung in Eingriff, wobei die Ausnehmung für das Verschlusselement in axialer Richtung einen Anschlag bewirkt.

Das Dokument US 2527053 zeigt ein Verschlussmittel mit einer konvex gewölbten Oberfläche. Die Fixierung des Verschlussmittels erfolgt über gefederte Finger, die radial nach innen gerichtete freie Enden aufweisen, die das Einführen in die Öffnung erleichtern und ein Verspannen innerhalb der Öffnung bewirken.

Wünschenswert wäre eine Anordnung zum sicheren Verschließen von Öffnungen für ein Befestigungselement, wodurch Ablagerungen in der Öffnung vermieden werden und die Verschlussanordnung zudem einen Verschleiß des Befestigungselements verhindert und weiterhin das Befestigungselement gegen unbefugtes Lösen gesichert werden kann. Das Verschlusselement sollte dabei einfach und mit geringem Aufwand montierbar und derart ausgestaltet sein, dass sich das Verschlusselement nach dessen Einsetzen in die Öffnung nicht wieder zerstörungsfrei entnehmen lässt. Auch sollte durch das Verschlusselement das Befestigungselement vor Verschleiß geschützt werden und deshalb eine zumindest verschleißarme Oberfläche aufweisen.

Die bekannten Anordnungen der oben genannten Art sind für eine derartige Anordnung zum Verschließen aber nur unzureichend geeignet.

Der Erfindung liegt daher die Aufgabe zu Grunde, eine Anordnung der eingangs genannten Art anzugeben, mit der eine Öffnung für ein Befestigungselement effektiv und sicher verschlossen werden kann und wobei einem Verschleiß des Befestigungselements entgegen gewirkt und der Schutz gegen unberechtigten Lösen des Befestigungselements erreicht wird.

Die Aufgabe wird erfindungsgemäß durch eine Anordnung zum Verschließen einer Bohrung für ein versenkt innerhalb der Bohrung angeordnetes Befestigungselement dadurch gelöst, dass die Bohrung zur Aufnahme eines Verschlusselements oder einer Verschlusseinheit einen radial erweiterten Endabschnitt aufweist. Im Bereich des Endabschnitts ist mindestens eine Ausnehmung radial eingebracht oder gebildet und das Verschlusselement oder die Verschlusseinheit stehen über Verbindungsmittel mit der Ausnehmung in Eingriff, wobei mindestens eine Ausnehmung für das Verschlusselement oder die Verschlusseinheit in axialer Richtung einen Anschlag bewirkt.

Der Anschlag bewirkt dabei, dass sich einerseits das Mittel zum Verschließen nur bis zu einer bestimmten Tiefe in axialer Richtung in die Öffnung einführen lässt und andererseits wird dadurch das Verschlussmittel sicher in der Öffnung fixiert indem die Verbindungsmittel in die Ausnehmung eingreifen, insbesondere wird eine Entnahme nach der Montage verhindert oder erschwert. Das Verschlusselement oder die Verschlusseinheit sitzt dadurch, dass die Verbindungsmittel mit der Ausnehmung in Eingriff und der Anschlag durch die Ausnehmung einer axiale Bewegung entgegenwirken, sicher in der Öffnung.

Die Erfindung geht dabei von der Überlegung aus, dass durch ein geeignetes Verschlusselement, beispielsweise für den Einsatz in einer Rührwerksmühle, einerseits die wartungsfreie Betriebszeit und Zuverlässigkeit der Mühle erhöht und andererseits sich aber auch die Wartung einfacher durchführen lässt, da beispielsweise bei einem Austausch eines Maschinenteils die Befestigungselemente nur gering oder nicht verschlissen sind. Der ungehinderte Zugang zum Befestigungselement nach dem Entfernen des Verschlusselements ist möglich, da sich Verschmutzungen oder Reste des Mahlguts nicht in die Öffnung zu Befestigungselement absetzen können. Besonders bei einer Rührwerksmühle ist der Schutz vor Verschleiß wesentlich für einen sicheren Betrieb, da die Bauteile und auch deren Befestigungselemente in der Mahlkammer, durch das zu vermahlende Gut und den darin enthaltenen hochfesten Mahlhilfskörpern, beschädigt werden können. Zudem würde das Verschlusselement wirksam verhindern, dass nicht autorisierte Personen Montagearbeiten an der Maschine vornehmen und damit deren Betriebssicherheit gefährden.

Die hier beschriebene Anordnung wird somit zum Verschließen einer Bohrung innerhalb einer Mahlkammer einer Rührwerkskugelmühle verwendet. Da das Verschlusselement bzw. die Verschlusseinheit im laufenden Produktionsbetrieb besonders stark beansprucht wird, ist vorgesehen, dass das Verschlusselement oder die Verschlusseinheit öffnungsseitig mit einer verschleißfesten Schutzschicht und/oder einem verschleißfesten Schutzkörper versehen ist/sind.

Vorzugsweise sind die Verbindungsmittel durch ein oder mehrere Ausnehmungen im Verschlusselement oder in einem Teilelement der Verschlusseinheit gebildet. Dadurch können Material und Kosten eingespart werden. Zudem ist das Verschlussmittel mit einem relativ geringen Aufwand herstellbar. Die Verschlussmittel sind dabei derart ausgestaltet, dass diese federnd wirken, wodurch ein Einführen in die Öffnung ermöglicht wird, bis die Verbindungsmittel aufgrund der Federwirkung in die radial eingebrachte Ausnehmung eingreift. Die Ausnehmung und die Verbindungsmittel weisen dazu eine zueinander korrespondierende Form und Ausrichtung auf.

Eine weitere bevorzugte Ausführungsform sieht vor, dass das Verschlussmittel mit der Öffnungsoberfläche plan abschließt. Zum einen bleibt keine Öffnung bzw. Vertiefung bestehen, in der sich Reste von Mahlgut oder Verschmutzungen absetzen können und zum anderen ragt das Verschlussmittel nicht über die Öffnungsoberfläche hinaus. Sollte nämlich das Verschlusselement oder die Verschlusseinheit beispielsweise in die Mahlkammer hineinragen, können diese, insbesondere durch die in der Rührwerksmühle enthaltenen Mahlhilfskörper, beschädigt werden. Bei einer solchen Beschädigung können Bruchstücke vom Verschlussmittel in das Mahlgut gelangen oder das Verschlussmittel löst sich vollständig aus seiner Verankerung. Das kann zu Schäden in der Rührwerksmühle führen. Auch besteht die Gefahr, dass verunreinigtes Mahlgut in die weitere Verarbeitungskette gelangt.

Dennoch kann es vorteilhaft sein, wenn das Verschlussmittel über die Öffnungsoberfläche hinausragt. Zum einen kann dadurch verhindert werden, dass das Verschlussmittel statt plan mit der Öffnungsoberfläche abzuschließen, ungewollt zu tief in die Öffnung eingebracht wird und zum anderen wird so eine Art Puffer bereit gestellt, welcher einen bestimmten Verschleißgrad des Verschlussmittels zulässt, ohne dass eine Vertiefung entsteht. Beispielsweise kann es vorteilhaft sein, wenn das Verschlussmittel 0,1 bis 0,3 mm über die Oberfläche der Öffnung hinausragt. Durch den Verschleiß wird sich mit der Zeit die Oberfläche des Verschlussmittels der Öffnungsoberflächen annähern, bis diese mit der Öffnungsoberfläche plan abschließt.
In einer weiteren vorteilhaften Ausgestaltung ist das Verschlussmittel zwei- oder mehrstückig als eine Art Verschlusseinheit ausgebildet, die sich aus zwei oder mehreren Teilelementen zusammensetzt. Das Verschließen der Öffnung erfolgt beispielsweise in mehreren Phasen, indem ein erstes Teilelement in die Öffnung eingeführt wird, dann ein zweites, das zu einer oder einer zusätzlichen Befestigungswirkung der Verschlusseinheit führt und abschließend noch ein drittes Teilelement, das die Öffnung schließt. Selbstverständlich ist es auch denkbar, dass sich jedes der Teilelemente noch einmal aus zwei oder mehreren Einzelteilen zusammensetzt.

Vorzugsweise ist das Verschlussmittel als Verschlusseinheit zweistückig ausgebildet. Dabei ermöglicht ein erstes Teilelement die Befestigung in der Öffnung und ein zweites Teilelement verschließt die Öffnung und dient beispielsweise dem Schutz vor abrasiven Verschleiß und stellt zusätzlich eine Versiegelung dar. Für einen Verschleißschutz kann das Verschlusselement oder die Verschlusseinheit öffnungsseitig mit einer verschleißbeständigen Schutzschicht versehen sein oder das Verschlusselement oder die Verschlusseinheit aus einem verschleißbeständigen Material bestehen. Vorzugsweise kommt jedoch eine die Öffnung verschließende Schutzkappe aus einem verschleißbeständigen Material zum Einsatz. Als geeignete Materialien und Ausführung kommen beispielsweise Keramik, Hartmetall, Kunststoff oder eine PVD-Schicht in Form von metallisiertem Kunststoff, Hartstoffschichten oder Materialien aus Titannidrid in Betracht. Denkbar ist auch das Aufbringen einer Diamantbeschichtung. Je nach Anwendung sind neben den harten Werkstoffen auch Kunststoffe geeignet einen effektiven Verschleißschutz zu bilden, da diese eine höhere Elastizität aufweisen was insbesondere bei der Verwendung von Mahlhilfskörpern von Vorteil ist. Bei einer mehrstückig ausgebildeten Verschlusseinheit sollten auch die nicht die Öffnung verschließenden Teilelemente gegenüber Mahlgut beständig sein, für den Fall, dass Mahlgut in die Öffnung eindringt und mit den Teilelementen in Verbindung kommt.

In einer besonders bevorzugten Ausgestaltung ist die Verschlusskappe aus einem keramischen Material hergestellt oder mit wenigstens einer keramischen Schicht versehen. Dadurch wird ein besonders wirksamer Verschleißschutz erreicht. Zudem stellt diese Ausführung einen effektiven Schutz vor unberechtigtem Zugriff dar. Bei dieser Anordnung kann das Verschlusselement oder die Verschlusseinheit nicht zerstörungsfrei aus der Öffnung entfernt werden, was zu einer wirksamen Versiegelung führt.

Als besonders vorteilhaft hat sich erwiesen, dass die Verschlusskappe mit dem Verschlusselement form- und/oder kraftschlüssig verbunden ist. Dadurch ist es möglich, die Verschlusskappe mit geringem Aufwand und ohne Hilfsstoffe wie beispielsweise Kleber in die Öffnung einzusetzen und zu fixieren. Dazu kann die Verschlusskappe mit einem zum Befestigungselement hin gerichteten pilzstielförmigen Ansatz versehen sein, welcher in eine im Verschlusselement beziehungsweise im Teilelement eingebrachte, den Ansatz aufnehmende Ausnehmung hineinragt. Vorzugsweise ist diese Verbindung derart ausgestaltet, dass sich die Verbindung zwischen Verschlusskappe und Teilelement nicht zerstörungsfrei wieder lösen lässt. Zu diesem Zweck kann das Teilelement so dimensioniert sein, dass deren Entnahme nach dem Einsetzen der Verschlusseinheit erschwert oder verhindert wird. Bei dieser Ausführungsvariante handelt es sich um eine sogenannte Klickverbindung, bei der das Teilelement mit federnd wirkenden Aufnahmeelementen versehen ist. Das Verschließen der Öffnung erfolgt dazu in den folgenden Schritten: In einem ersten Schritt erfolgt das Einsetzen der Verschlusskappe in das Teilelement. In dieser Phase können die Aufnahmeelemente beim Einsetzen der Verschlusskappe radial nach Außen ausweichen um den Ansatz aufzunehmen. In einem zweiten Schritt wird die Verschlusseinheit in die Öffnung eingesetzt. Die Verschlusskappe kann nun nicht wieder zerstörungsfrei entfernt werden, da die Aufnahmeelemente jetzt an der Öffnungswandung anliegen oder einen zu geringen Abstand zur Öffnungswandung haben, so dass sich die Aufnahmeelemente nicht weit genug radial nach Außen in Richtung der Öffnungswandung bewegen können, was aber erforderlich wäre, um den Ansatz und damit auch die Verschlusskappe wieder frei zu geben.

In einer bevorzugten Weiterbildung ist das Verschlusselement mit einer zur Form des Endabschnitts des Befestigungselementes korrespondierenden Aussparung versehen. Dadurch wird erreicht, dass das Verschlusselement oder die Verschlusseinheit möglichst weit in die Öffnung eingebracht werden kann und die Einbringtiefe durch das Befestigungselement nicht begrenzt wird. Nach der Montage wird also das Befestigungselement, insbesondere dessen Endabschnitt vom Verschlusselement oder Teilelement zumindest teilweise umgeben.

Um das Verschlusselement beziehungsweise die Verschlusseinheit in der Öffnung zu fixieren, ist innerhalb der Öffnung, im radial erweiterten Endabschnitt, die Ausnehmung vorzugsweise durch eine umfänglich verlaufende radial eingebrachte Nut gebildet. Das hat den Vorteil, dass es beim Verschließen der Öffnung nicht erforderlich ist, das Verschlusselement oder die Verschlusseinheit zur Ausnehmung ausgerichtet/positioniert einzubringen.

Besonders bevorzugt ist die Nut nahe dem Endabschnitt des Befestigungselementes eingebracht, insbesondere schließt die Nut in axialer Richtung der Öffnung gesehen endseitig mit dem radial erweiterten Endabschnitts ab. Somit ist eine effektive Führung des Verschlusselements beziehungsweise der Verschlusseinheit innerhalb des radial erweiterten Endabschnittes der Öffnung gewährleistet. Die Öffnung wird besonders sicher verschlossen, da bei entsprechender Dimensionierung und Passgenauigkeit zur formschlüssigen Verbindung zusätzlich eine kraftschlüssige Verbindung hergestellt werden kann. Weiterhin wird ein Verdrehen des Verschlusselements innerhalb des radial erweiterten Bereichs der Öffnung, quer zur Längsachse der Verschlussanordnung, verhindert oder zumindest erschwert. Insbesondere wird einer nachteiligen Verklemmung oder Verkeilung des Verschlusselements/-einheit innerhalb der Öffnung entgegen gewirkt.

Ergänzend dazu, als eine zusätzliche Befestigungsvariante oder als besondere Ausführungsform, ist die Ausnehmung vorzugsweise durch eine im Bereich des Endabschnitts des Befestigungselementes eingebrachter Nut bereit gestellt. Dies wird dadurch möglich, dass, wie oben schon beschrieben, das Verschlusselement oder ein Teilelement das Befestigungselement zumindest teilweise umschließt. Dadurch wird erreicht, dass entsprechend ausgebildete Verbindungsmittel des Verschlusselements oder des Teilelements in die Ausnehmung in der Öffnungswandung und/oder in die als Nut ausgebildete Ausnehmung im Befestigungselement in Eingriff stehen können. Dem Fachmann ist klar, dass es sich bei der Nut nur um eine mögliche Ausführungsvariante einer Ausnehmung handelt. Die Ausnehmung kann selbstverständlich auch anders gestaltet sein.

In einer bevorzugten Weiterbildung ist die Ausnehmung mittels einer im Bereich des Endabschnitts des Befestigungselementes, an seiner der Öffnung abgewandten Seite, erzeugten Fase gebildet. Dadurch wird erreicht, dass die Fase und eine der Fase gegenüberliegende Auflagefläche eine umfänglich verlaufende Ausnehmung bilden, in der die Verbindungsmittel eingreifen können.

Weiter kann vorgesehen sein, dass die Ausnehmung mit Hilfe eines Abstandshalters für das Befestigungselement gebildet ist. Beispielsweise indem der Abstandshalter eine geringere radiale Ausdehnung als der Endabschnitt des Befestigungselements aufweist. Dadurch wird eine Ausnehmung zwischen der Auflagefläche und des durch den Abstandshalter beabstandet angeordneten Befestigungselements gebildet. Aber auch der Abstandhalter selbst kann radiale Ausnehmungen aufweisen, in denen die Verbindungsmittel eingreifen können. Vorteilhaft ist dabei, dass der Abstandshalter eine vergrößerte radiale Ausdehnung aufweist und die durch das Befestigungselement ausgeübte Kraft über eine größere Auflagefläche verteilt wird.

In einer weiteren Variante ist das Befestigungselement eine Schraube und der Abstandshalter eine Art Unterlegscheibe. Die Tiefe der Ausnehmung wird dabei durch den Außendurchmesser der Unterlegscheibe bestimmt, die Breite beziehungsweise Höhe der Ausnehmung durch die Dicke bzw. Stärke der Unterlegscheibe. Statt nur einer Unterlegscheibe können auch mehrere Unterlegscheiben verwendet werden. Denkbar ist auch der Einsatz einer Schraube mit einem sogenannten Telleransatz, wodurch eine Unterlegscheibe entfallen kann.

Die mit der Erfindung erzielten Vorteile bestehen insbesondere darin, dass unter Verwendung des erfindungsgemäßen Verschlusselements eine Anordnung zum Verschließen von Öffnungen für ein Befestigungselement bereit gestellt werden kann, die einfach und sicher montierbar ist und einerseits als Einrichtung zum Verhindern eines unbefugten Lösens eines Befestigungselements, insbesondere einer Befestigungsschraube dienen kann aber auch andererseits zum Schutz vor Verschleiß im Bereich der Befestigung seine Anwendung findet. Dabei kann das Verschlusselement oder die Verschlusseinheit einfach und kostengünstig hergestellt werden und ist universell einsetzbar.

Ausführungsformen der vorliegenden Erfindung werden in exemplarischer Weise mit Bezug auf die angehängten schematischen Zeichnungen beschrieben. Darin zeigen:
- Fig. 1: ein Verschlusselement mit Ausnehmungen an seiner der Öffnung abgewandten Seite und mit einer zur Form des Endabschnitt eines Befestigungselementes korrespondierenden Aussparung,
- Fig. 2: ein Verschlusselement wie in Fig. 1 gezeigt aber mit einer an seiner der Öffnung zugewandten Seite angeordneten Verschlusskappe,
- Fig. 3: eine Verschlusskappe für eine Verschlusseinheit,
- Fig. 4: ein Teilelement für eine Verschlusseinheit,
- Fig. 5: die Schnittdarstellung einer montierten Verschlusseinheit, deren Verbindungsmittel in eine radial nach außen eingebrachte Ausnehmung in einer Öffnungswandung eingreifen, umfassend ein Teilelement und eine Verschlusskappe,
- Fig. 6: die Schnittdarstellung einer weiteren Variante einer montierten Verschlusseinheit, deren Verbindungsmittel in eine radial nach außen eingebrachte Ausnehmung in einer Öffnungswandung eingreifen, umfassend ein Teilelement und eine Verschlusskappe,
- Fig. 7: die Schnittdarstellung eines montierten Verschlusselementes, deren Verbindungsmittel in eine radial nach außen eingebrachte Ausnehmung in einer Öffnungswandung eingreifen,
- Fig. 8: die Schnittdarstellung einer montierten Verschlusseinheit, deren Verbindungsmittel eines Teilelements in eine radial nach innen durch einen Abstandshalter gebildete Ausnehmung am Befestigungselement eingreifen,
- Fig. 9: die Schnittdarstellung eines montierten Verschlusselementes, deren Verbindungsmittel in eine radial nach innen in einem Abstandshalter eingebrachte Ausnehmung eingreifen,
- Fig. 10: die Schnittdarstellung eines montierten Verschlusselementes, deren Verbindungsmittel in eine radial nach außen eingebrachte Ausnehmung in einem Abstandshalter eingreifen,
- Fig. 11: die Schnittdarstellung eines montierten Verschlusselementes, deren Verbindungsmittel in eine radial nach innen durch eine Fase am Kopf eines Befestigungselements gebildete Ausnehmung eingreifen und
- Fig. 12: einen Abschnitt einer Rührwerksmühle mit einem wie in Fig.7 gezeigten montierten Verschlusselement in einer Schnittdarstellung.

Gleiche Teile sind in allen Figuren mit denselben Bezugszeichen versehen.

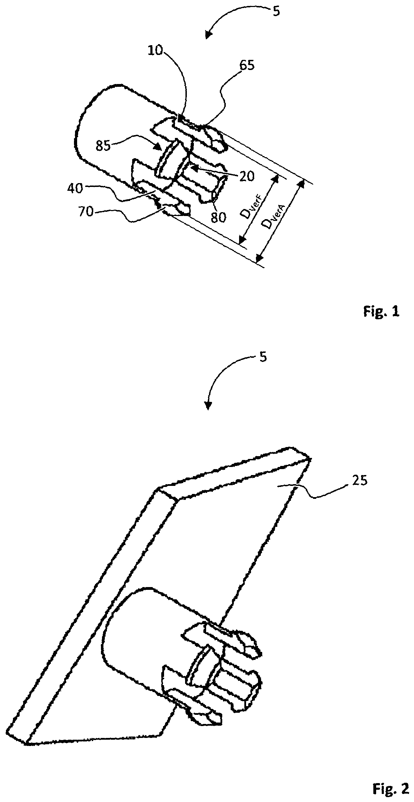

Fig.1 zeigt ein aus einem Kunststoff einstückig ausgebildetes Verschlusselement 5 zum Verschließen einer Öffnung. Das Verschlusselement 5 weist eine axial eingebrachte zylindrische Aussparung 20 auf und zusätzlich vier radial eingebrachte Ausnehmungen 10, wodurch Verbindungsmittel 40 gebildet werden. Jedes der Verbindungsmittel 40 ist endseitig mit radial nach Außen verlaufenden Auskragungen 65 versehen, welche derart ausgestaltet sind, dass sich das Verschlusselement 5 einfach und ohne Hilfsmittel in die Öffnung einführen lässt. Dazu ist die Auskragung 65 endseitig des Verbindungsmittels 5 mit einer Fase 70 versehen, so dass als eine Art Montagehilfe der Außendurchmesser D_{VerF} am Ende des Verschlusselements 5 kleiner ist als der Außendurchmesser der Öffnung. Der Außendurchmesser D_{VerA} durch die Auskragung 65 ist dagegen größer als der Außendurchmesser der Öffnung. Beim Einführen des Verschlusselementes 5 in die Öffnung werden dadurch die Verbindungsmittel 40 erst federnd radial nach innen gedrückt, die sich nach der Montage aber wieder zurückbewegen und in eine Ausnehmung der Öffnungswandung eingreifen. Weiterhin weisen die Verbindungsmittel 40 eine Anschlagfläche 80 sowie eine Haltefläche 85 auf, welche zugleich auch eine Anschlagfläche darstellt. Die Anschlagfläche 80 kann im montierten Zustand an der Auflagefläche für ein Befestigungselement anliegen, die Haltefläche 85 sichert das Verschlusselement 5 in der Öffnung und verhindert, dass das Verschlusselement 5 zurückgezogen werden kann, wodurch eine zerstörungsfreie Demontage der Verschlussanordnung nicht möglich ist. Dazu sind die mit der Auskragung 65 versehenen Verbindungsmittel 40 hakenartig ausgebildet.

Ein mit einer Verschlusskappe 25 versehenes Verschlusselement 5 ist in Fig. 2 dargestellt. Mit Hilfe eines derartigen Verschlusselements 5 kann beispielsweise eine Öffnung mit einer zur Verschlusskappe 25 korrespondierenden Form verschlossen werden, wobei der radial erweiterten Endabschnitts der Öffnung einen kreisrunden Querschnitt zur Aufnahme des zur Fixierung dienenden Abschnitts des Verschlusselements 5 aufweist.

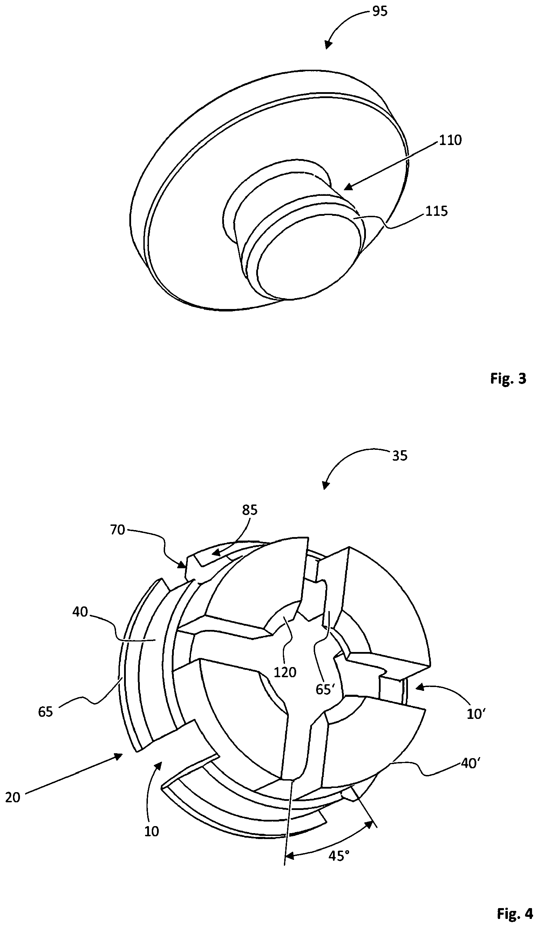

Fig. 3 zeigt eine separate Verschlusskappe 95 für ein Teilelement 35, das in Fig. 4 dargestellt ist. Beide zusammen bilden eine Verschlusseinheit. Die Verschlusskappe 95 wird bei der Montage mit dem Teilelement 35 über eine Art Klickverbindung verbunden. Dazu weist die Verschlusskappe 95 einen pilzstilförmigen Ansatz 110 auf. Ähnlich wie bei den Verbindungsmitteln 40 für die Öffnungswandung ist der Ansatz 110 mit einer Fase 115 versehen, welche als Montagehilfe dient.

Wie bei dem in Fig. 2 gezeigten Verschlusselement 5 ist das Teilelement 35 in Fig. 4 mit Ausnehmungen 10 und einer zylindrischen Aussparung 20 versehen, wodurch Verbindungsmittel 40 gebildet werden, welche eine sichere Fixierung der Verschlusseinheit 30 in der Öffnung ermöglichen. An dem die Verschlusskappe 95 aufnehmenden Ende sind ebenfalls Ausnehmungen 10' eingebracht, die, aufgrund der bis in diesen Bereich reichenden Aussparung 20, Verbindungsmittel 40' für die Aufnahme der Verschlusskappe 95 bilden und die mit Auskragungen 65' versehen sind. Um die Montage der Verschlusskappe 95 weiter zu vereinfachen, sind die so gebildeten Verbindungsmittel 40' ebenfalls mit einer Fase 120 versehen. Die radial eingebrachten Ausnehmungen 10,10' an den beiden Enden des Teilelements 35 sind in einem Winkel von 45° versetzt eingebracht. Das hat den Vorteil, dass die Baulänge des Teilelements 35 kurz gehalten und die Federwirkung und Elastizität der Verbindungsmittel 40,40' verbessert werden kann. Selbstverständlich kann der Versetzungswinkel auch größer oder kleiner 45° sein, solange sich die Ausnehmungen nicht überschneiden.

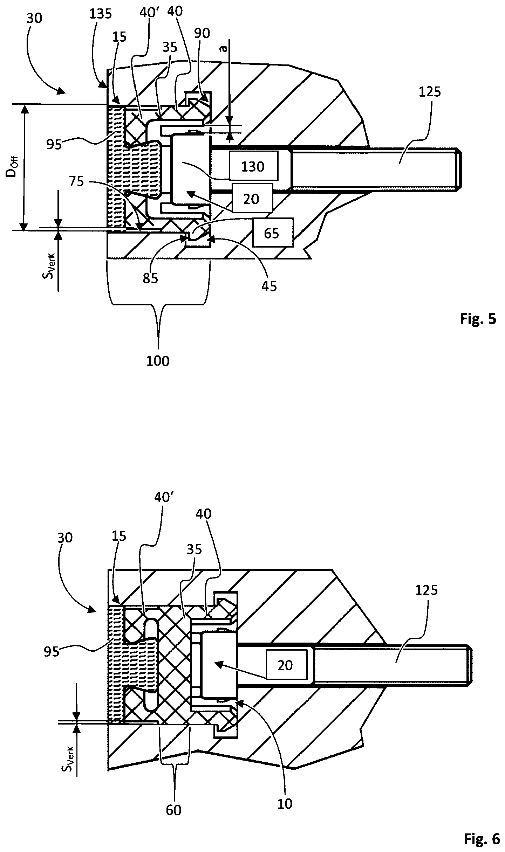

Die Figuren 5 bis 11 zeigen unterschiedliche Ausführungsformen der erfindungsgemäßen Verschlussanordnung im montierten Zustand. Als Befestigungselement dient eine Schraube 125, deren Endabschnitt ein Schraubenkopf 130 darstellt, der in der Öffnung 15, welche im Endabschnitt 100 radial erweitert ist, angeordnet ist und durch die Verschlussanordnung verdeckt wird. In die Öffnungswandung 75, innerhalb der Öffnung 15, ist eine umfänglich verlaufende Ausnehmungen 45 in Form einer Nut eingebracht, in der die Verbindungsmittel 40 des Teilelements 35 eingreifen. Die Anschlagflächen der Verbindungsmittel 40 des Teilelements 35 liegen an der Auflagefläche 90 innerhalb der Öffnung 15 an und verhindern, dass die Verschlusseinheit 30 zu weit in die Öffnung 15 hineingeschoben werden kann. Durch die Halteflächen 85 wird eine axiale Bewegung in Richtung der Öffnung 15 verhindert. Das Verschlusselement 5 beziehungsweise die Verschlusseinheit 30 schließt mit der Öffnungsoberfläche 135 plan ab.

In Fig. 5 ist eine montierte Verschlusseinheit 30, umfassend eine Verschlusskappe 95 und ein Teilelement 35, gezeigt, bei der das Teilelement 35 befestigungsseitig eine Aussparung 20 für den Schraubenkopf 130 aufweist. Somit ist der Schraubenkopf 130 von den Verbindungsmitteln 40 umgeben. Die Verschlusskappe 95 ist mit dem Teilelement 35 über die Klickverbindung verbunden. Dabei sind die Verschlusskappe 95, insbesondere deren pilzförmige Ansatz 110, und das Teilelement 35 so dimensioniert, dass der Ansatz 110 nicht mit dem Schraubenkopf 130 kollidiert. Die Auskragungen 65 endseitig der Verbindungsmittel 40 ragen in die Ausnehmung 45 in der Öffnungswandung 75 hinein, wobei die radiale Ausdehnung der Auskragung 65 kleiner ist als der Abstand a zwischen Schraubenkopf 130 und Verbindungsmittel 40. Dadurch wird ermöglicht, dass bei der Montage der Verschlusseinheit 30, die Verbindungsmittel 40, welche aufgrund der Auskragung 65 federnd nach innen gebogen werden, noch am Schraubenkopf 130 in axialer Richtung vorbei geführt werden können. Dabei spielt auch die Geometrie der Verbindungsmittel 40, insbesondere die der Auskragung 65 eine Rolle. Der Abstand a zwischen Schraubenkopf und dem Verbindungsmittel 40 sollte also mindestens so groß gewählt werden, dass sich die Verschlusseinheit 30 bei der Montage einfach und vollständig bis zum Anschlag einführen lässt und sich auch nicht in der Öffnung 15 verklemmt.

Die Montage der Verschlusseinheit 30 erfolgt in zwei Schritten. In einem ersten Schritt wird die Verschlusskappe 95 in das Teilelement 35 hinein geklickt, wodurch die Verschlusseinheit 30 gebildet wird. In einem zweiten Schritt wird die Verschlusseinheit 30 in die Öffnung 15 eingebracht. Um Fertigungstoleranzen auszugleichen, ist das Teilelement 35 so ausgebildet, dass im Aufnahmebereich für die Verschlusskappe 95, das Teilelement 35 einen verkleinerten Umfang aufweist, so dass, wie auch in der Abbildung gut zu erkennen ist, ein Spalt S_{VerK} zwischen der Öffnungswandung 75 und dem Teilelement 35 in diesem Bereich entsteht. Ohne dem Spalt S_{VerK} zwischen dem Teilelement 35 und der Öffnungswandung 75 bestände die Gefahr, dass die Verbindungsmittel 40' für die Verschlusskappe 95, nach der Montage im ersten Schritt, radial nach außen gedrückt werden und dadurch der Außendurchmesser des Teilelements 35 erweitert wird, so dass die Verbindungseinheit 30 nicht in die Öffnung passt und der zweite Schritt nicht ausgeführt werden kann.

Der Spalt S_{VerK} ist so ausgebildet und dimensioniert, dass nach der Montage der Verschlusseinheit 30, die Verschlusskappe 95 nicht einfach wieder entfernt werden kann. Das heißt, der Spalt S_{VerK} sollte nicht zu groß gewählt sein, damit bei dem Versuch, die Verschlusskappe 95 wieder aus dem Teilelement 35 heraus zu ziehen, die Verbindungselemente 40' für die Verschlusskappe 95 gegen die Öffnungswandung 75 gedrückt werden, noch bevor die Verbindungsmittel 40' die Verschlusskappe 95 freigeben.

Bei dieser Ausführungsform besteht die Verschlusskappe 95 aus einem keramischen Material, nämlich aus Siliziumcarbid (SiC) und das Teilelement 35 aus einem Kunststoff, nämlich aus Teflon (PTFE). Aufgrund seiner elastischen Eigenschaften ist der Kunststoff als Herstellungsmaterial für das Teilelement 35 geeignet, da insbesondere dadurch die gebildeten Verbindungsmittel 40,40' bei der Montage elastisch verformbar sind und federnd wirken können. Im Gegensatz dazu ist die Verschlusskappe 95 aus Keramik und weist damit einen hohen Härtegrad auf, hat aber dafür kaum elastische Eigenschaften. Die Verschlusskappe 95 bietet deshalb einen effektiven Schutz vor Verschleiß und bietet zudem Schutz vor einer unberechtigten Demontage der Verschlusseinheit 30. Der Umfang der Verschlusskappe 95 und auch der des Teilelements 35 sind im Wesentlichen so bemessen, dass die Verschlusseinheit 30 passgenau in die Öffnung 15 eingebracht werden kann. Insbesondere sollte, unter Berücksichtigung von Fertigungstoleranzen und etwaiger unterschiedlicher Ausdehnungskoeffizienten, ein Spalt zwischen Verschlusskappe 95 und Öffnungswandung 75 so gering wie möglich gehalten werden. Dadurch können Ablagerungen vermieden und die Schutzwirkung verbessert werden.

Eine Verschlusseinheit 30 mit verbesserten Eigenschaften ist in Fig. 6 dargestellt. Im Unterschied zu Fig. 5 weist die Verschlusseinheit 30 in Fig. 6 beispielsweise eine erhöhte Stabilität auf. Insbesondere bei relativ großen Öffnungen 15 können sich die Ausnehmungen 10,10', die Aussparung 20 und die Spaltbreite S_{VerK} negativ auf die Stabilität und damit auf die Sicherheit und Zuverlässigkeit der Verschlussanordnung 30 auswirken, nämlich dann, wenn aufgrund des verwendeten Materials und der Materialdicke eine sichere Fixierung von Verschlusskappe 95 und der Verschlusseinheit 30 insgesamt nicht mehr gewährleistet werden kann. Um dem entgegenzuwirken, sind die Ausnehmungen 10,10',die Aussparungen 20 und die Spaltbreite S_{VerK} vorzugsweise nur so groß zu wählen, wie das für die erfindungsgemäße Funktion notwendig ist. Das führt zu einem verstärkten Bereich 60 des Teilelements 35 und zwar zwischen den Verbindungsmitteln 40' für die Verschlusskappe 95 und den Verbindungsmitteln 40 für die Verschlusseinheit 30. Das Teilelement 35 wird dadurch stabiler. Zudem ist die Wahrscheinlichkeit, dass sich die Verschlusseinheit 30 bei der Montage verklemmen kann, auch aufgrund der längeren Bauform geringer.

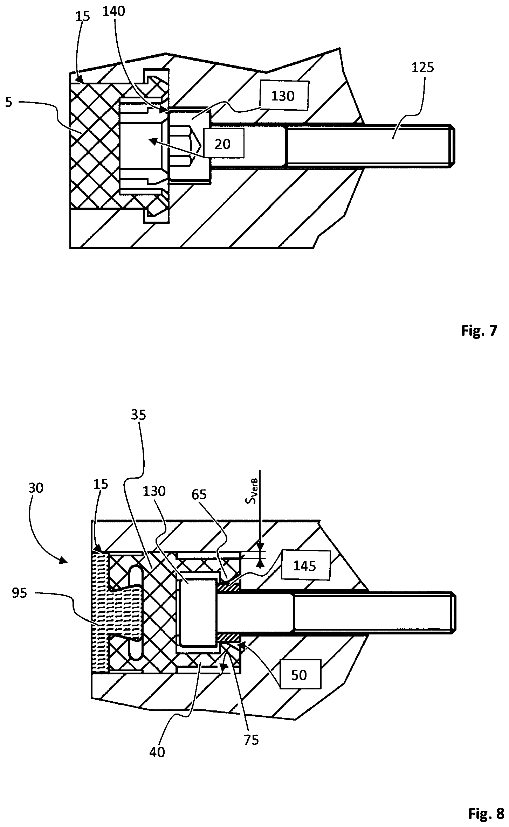

Ein Beispiel für eine Verschlussanordnung mit einem einstückigen Verschlusselement 5 ist in Fig. 7 dargestellt. In der Ausführungsform ist die als Befestigungselement 125 verwendete Schraube separat versenkt. Dazu ist in der Öffnung 15 eine nur den Schraubenkopf aufnehmende weitere Öffnung 140 eingebracht. Das Verschlusselement 5 ist dennoch, wie auch bereits an den vorangegangenen Beispielen gezeigt, mit einer axial eingebrachten zylindrischen Aussparung 20 versehen. Die Aussparung 20 ist geeignet den Schraubenkopf 130 aufzunehmen. Das Verschlusselement 5 ist somit universell für beide bisher gezeigte Ausführungsformen einer Öffnung 15 einsetzbar. Der Vorteil der axialen Aussparung 20 in dieser Ausführungsform kann darin gesehen werden, dass die Dimensionierung und damit auch die Federwirkung der Verbindungsmittel 40 eingestellt werden kann. Dabei sollte das Verhältnis von Durchmesser und Länge der Aussparung 20 so gewählt sein, dass einerseits eine ausreichende Federkraft für einen Eingriff der Verbindungsmittel 40 in der Öffnungswandung 75 erreicht wird und andererseits sollte die Federkraft auch nicht zu groß sein, da sich sonst das Verschlusselement nur schwer oder gar nicht in die Öffnung 5 einbringen lässt.

Fig. 8 zeigt eine montierte Verschlusseinheit 30 umfassend ein Teilelement 35 und eine daran befestigte Verschlusskappe 95 wie vorangegangen bereits beschrieben und in Fig. 6 gezeigt. Im Unterschied zu der in Fig. 6 gezeigten Verschlusseinheit 30 ist diese aber nicht durch Verbindungsmittel 40, die in einer Ausnehmung 45 in der Öffnungswandung 75 eingreifen, in der Öffnung 15 fixiert, sondern dadurch, dass die Verbindungsmittel 40 in eine im Bereich des Endabschnitts des Befestigungselements 125 gebildeten Ausnehmung 50 eingreifen. Dazu ist die Ausnehmung 50 mit Hilfe eines Abstandshalters 145 gebildet, welcher eine geringere radiale Ausdehnung als der Endabschnitt des Befestigungselements aufweist.

Zusätzlich zur axialen Aussparung 20 zur Aufnahme für den Schraubenkopf 130 weist das Teilelement 35 in dem Bereich einen verkleinerten Durchmesser auf. Der dadurch entstehende Spalt ist erforderlich, damit die Verschlusseinheit 30 montiert werden kann. Dabei ist die Spaltbreite S_{VerB} so zu wählen, dass sich die Verbindungsmittel beim Einbringen in die Öffnung 15 federnd radial nach außen bewegen können, ohne sich zwischen dem Schraubenkopf 130 und der Öffnungswandung 75 zu verklemmen. Ein Entfernen oder Lösen der Verschlusseinheit 30 wird bei diesem Ausführungsbeispiel verhindert, indem die Auskragungen 65 der Verbindungsmittel 40 radial nach innen zeigen und in die Ausnehmung 50 eingreifen.

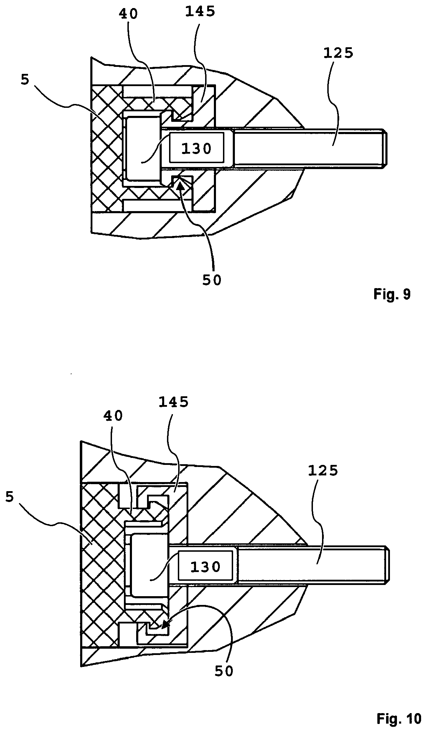

Bei der in Fig. 9 gezeigten Ausführungsform greifen Verbindungsmittel 40 des Verschlusselements 5 ebenfalls in eine Ausnehmung 50 im Bereich des Endabschnitts des Befestigungselements 125 ein, welche aber nicht durch den Abstandshalter 145 zwischen Schraubenkopf 130 und Auflagefläche gebildet, sondern in den Abstandshalter 145 selbst eingebracht sind. Der Abstandshalter 145 weist eine gegenüber der in Fig. 8 gezeigten Ausführungsform vergrößerte radiale Ausdehnung auf. Die durch das Befestigungselement 125 über den Abstandshalter 145 auf die Auflagefläche axial wirkende Kraft, wird vorteilhaft über eine größere Fläche verteilt.

Fig. 10 zeigt analog zu der in Fig. 9 gezeigten Ausführungsform ein Abstandshalter 145 mit einer vergrößerten Auflagefläche und Ausnehmung 50 für Verbindungsmittel 40 des Verschlusselements 5, mit dem Unterschied, dass die Ausnehmung 50 nicht radial nach innen, sondern radial nach außen in den Abstandshalter 145 eingebracht ist.

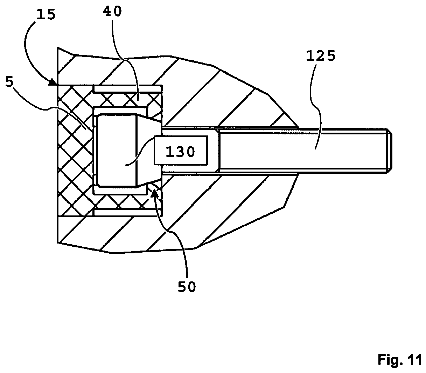

Eine weitere Ausführungsform mit einer radial nach innen gebildeten Ausnehmung 50 ist in Fig. 11 dargestellt. Dazu ist der als Schraubenkopf 130 ausgebildete Endabschnitt des Befestigungselements an seiner der Öffnung 15 abgewandten Seite mit einer Fase versehen. Die Verbindungsmittel 40 des Verschlusselements 5 können somit in eine durch die Fase gebildete Ausnehmung eingreifen.

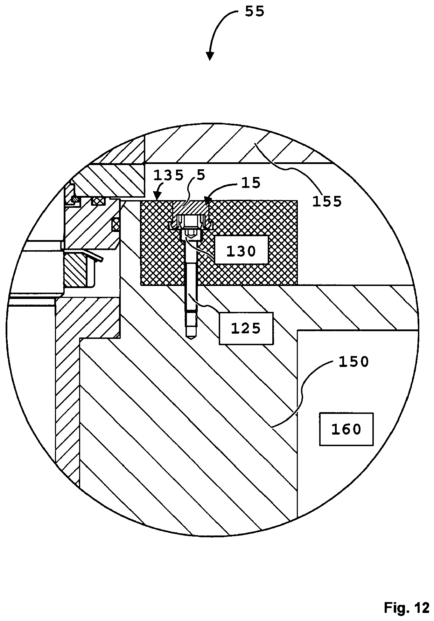

Am Beispiel der in Fig. 12 abgebildeten Verschlusseinheit 30 ist der Einsatz der erfindungsgemäßen Anordnung in einer Rührwerksmühle 55 ausschnittsweise gezeigt. Die hier dargestellte Verschlussanordnung wurde bereits in Fig. 7 ausführlich beschrieben. Das Verschlusselement 5 verschließt die Öffnung 15 für eine Befestigungsschraube 125, mit deren Hilfe zwei Bauteile eines sich im inneren der Rührwerksmühle 55 angeordneten Rotors 150 miteinander verbunden werden. Der Rotor 150 ist von einem Gehäuse 155 umgeben. Der Raum zwischen Rotor 150 und Gehäuse 155 wird als Mahlkammer 160 bezeichnet. In dieser Figur nicht dargestellt ist das zu vermahlende Gut, welches sich im Mahlbetrieb in der Mahlkammer 160 befindet und mit Mahlhilfkörpern angereichert ist. Durch die Verschlussanordnung wird die Öffnung 15 für das Befestigungselement 125 vollständig verschlossen, wobei das Verschlusselement 5 mit der Öffnungsoberfläche 135 plan abschließt. Ohne die Verschlussanordnung wären die Öffnung 15 und damit auch das Befestigungselement 125, hier insbesondere der Schraubenkopf 130, der negativen Wirkung des Mahlguts ausgesetzt. Vor allem der Einsatz der Mahlhilfskörper hätte einen hohen Verschleiß zur Folge. Vor allem wären die Öffnungskanten vom erhöhten Verschleiß betroffen. Aber auch der Kopf 130 der Befestigungsschraube 125 könnte so weit beschädigt werden, dass sich diese nicht oder nur mit erheblichen Aufwand lösen lässt.

Die Verschlussanordnung ist spezifisch auf einen effektiven Verschluss von Öffnungen, insbesondere von Öffnungen für ein Befestigungselement ausgerichtet, welche sowohl Schutz vor Verschmutzung und Verschleiß als auch einen effektiven Schutz vor einem unbefugten Lösen des Befestigungselements bietet. Die Öffnung wird dazu mit einem Verschlusselement versehen, das einfach herzustellen und zu montieren ist. Insbesondere kann die Verschlussanordnung aus beispielsweise zwei Elementen bestehen, nämlich aus einem Teilelement zur Verankerung beziehungsweise Fixierung innerhalb der Öffnung und einer Verschlusskappe aus einem verschleißarmen Material. Durch die besondere Konstruktion des Verschlusselements/Teilelements wird eine unerlaubte Demontage weitgehend verhindert, da diese mit einer Zerstörung des Verschlusselements beziehungsweise der Verschlusseinheit einhergehen würde und somit für den Fachmann leicht zu erkennen ist, ob an der betreffenden Maschine Montage- oder Wartungsarbeiten vorgenommen worden sind.

### Bezugszeichenliste

- 5: Verschlusselement
- 10,10': Ausnehmungen im Verschlusselement/Teilelement
- 15: Öffnung
- 20: Aussparung
- 25: Verschlusskappe
- 30: Verschlusseinheit
- 35: Teilelement
- 40,40': Verbindungsmittel
- 45: Ausnehmung in Öffnungswandung
- 50: Ausnehmung am Befestigungselement
- 55: Rührwerksmühle (Ausschnitt)
- 60: verstärkter Berreich
- 65,65': Auskragungen
- 70: Fase Verbindungsmittel
- 75: Öffnungswandung
- 80: Anschlagfläche Verbindungsmittel
- 85: Haltefläche
- 90: Auflagefläche Befestigungselement
- 95: separate Verschlusskappe
- 100: radial erweiterter Endabschnitt
- 110: pilzstilförmiger Ansatz
- 115: Fase der Verschlusskappe
- 120: Fase für Verschlusskappe
- 125: Befestigungselement/Schraube
- 130: Schraubenkopf
- 135: Öffnungsoberfläche
- 140: Öffnung Schraubenkopf
- 145: Abstandshalter
- 150: Rotor
- 155: Gehäuse
- 160: Mahlkammer
- D_{VerF}: Außendurchmesser am Ende des Verschlusselements 5
- D_{öff}: Außendurchmesser der Öffnung 15
- D_{VerA}: Außendurchmesser Auskragung
- a: Abstand Schraube-Verbindungsmittel
- S_{VerK}: Spaltbreite Öffnungswandung-Teilelement öffnungsseitig
- S_{VerB}: Spaltbreite Öffnungswandung-Teilelement befestigungsseitig

## Patentansprüche

1. Anordnung zum Verschließen einer Bohrung (15) für ein versenkt innerhalb der Bohrung (15) angeordnetes Befestigungselement (125), wobei die Bohrung (15) zur Aufnahme eines Verschlusselements (5) oder einer Verschlusseinheit (30) einen radial erweiterten Endabschnitt (100) aufweist und wobei im Bereich des Endabschnitts (100) mindestens eine Ausnehmung (45,50) radial eingebracht oder gebildet ist und das Verschlusselement (5) oder die Verschlusseinheit (30) über Verbindungsmittel (40) mit der Ausnehmung (45,50) in Eingriff stehen, wobei mindestens eine Ausnehmung (45,50) für das Verschlusselement (5) oder die Verschlusseinheit (30) in axialer Richtung einen Anschlag bewirkt, **dadurch gekennzeichnet, dass** die Bohrung innerhalb einer Mahlkammer (160) einer Rührwerkskugelmühle (55) ausgebildet ist und dass das Verschlusselement (5) oder die Verschlusseinheit (30) öffnungsseitig mit einer verschleißfesten Schutzschicht und/oder einem verschleißfesten Schutzkörper (25,95) versehen ist.

2. Anordnung nach Anspruch 1, **dadurch gekennzeichnet, dass** die Verbindungsmittel (40) durch ein oder mehrere Ausnehmungen (10) im Verschlusselement (5) oder in einem Teilelement (35) der Verschlusseinheit (30) gebildet sind.

3. Anordnung nach Anspruch 1 oder 2, **dadurch gekennzeichnet, dass** das Verschlusselement (5) oder die Verschlusseinheit (30) mit einer Öffnungsoberfläche (135) plan abschließt.

4. Anordnung nach Anspruch 1 oder 2, **dadurch gekennzeichnet, dass** das Verschlusselement (5) oder die Verschlusseinheit (30) über die Öffnungsoberfläche (135) hinausragt.

5. Anordnung nach Anspruch 1 bis 4, **dadurch gekennzeichnet, dass** die Verschlusseinheit (30) mehrstückig ausgebildet ist.

6. Anordnung nach Anspruch 1 bis 5, **dadurch gekennzeichnet, dass** die Verschlusseinheit (30) zweistückig ausgebildet ist.

7. Anordnung nach Anspruch 1, **dadurch gekennzeichnet, dass** die Verschlusseinheit (30) eine verschleißbeständigen Schutzschicht und/oder eine Verschlusskappe (95) aufweist.

8. Anordnung nach Anspruch 7, **dadurch gekennzeichnet, dass** die Verschlusskappe (95) aus einem keramischen Material besteht.

9. Anordnung nach Anspruch 7 oder 8, **dadurch gekennzeichnet, dass** die Verschlusseinheit (30) mindestens ein Teilelement (35) aufweist mit dem die Verschlusskappe (95) form- und/oder kraftschlüssig verbunden ist.

10. Anordnung nach Anspruch 9, **dadurch gekennzeichnet, dass** die Verschlusskappe (95) durch eine Klickverbindung mit dem Teilelement (35) verbunden ist.

11. Anordnung nach Anspruch 1 bis 10, **dadurch gekennzeichnet, dass** das Verschlusselement (5) oder ein Teilelement (35) mit einer zur Form des Endabschnitts (130) des Befestigungselementes (125) korrespondierenden Aussparung (20) versehen ist.

12. Anordnung nach Anspruch 1 bis 11, **dadurch gekennzeichnet, dass** die radiale Ausnehmung (45,50) durch eine umfänglich eingebrachte Nut (45) gebildet ist.

13. Anordnung nach Anspruch 1 bis 12, **dadurch gekennzeichnet, dass** die Nut (45) in axialer Richtung der Bohrung (15) gesehen im Bereich des Endabschnitts (130) des Befestigungselementes (125) eingebracht ist.

14. Anordnung nach Anspruch 12 oder 13, **dadurch gekennzeichnet, dass** die Nut (45) in axialer Richtung der Bohrung (15) gesehen endseitig mit dem radial erweiterten Endabschnitts (100) abschließt.

15. Anordnung nach Anspruch 1 bis 14, **dadurch gekennzeichnet, dass** das Befestigungselement (125) in der Bohrung (15) endseitig eine radiale Ausnehmung (50) aufweist.

16. Anordnung nach Anspruch 1 bis 15, **dadurch gekennzeichnet, dass** die Ausnehmung (50) mittels einer im Bereich des Endabschnitts (130) des Befestigungselementes (125), an seiner der Bohrung (15) abgewandten Seite, erzeugten Fase (70) gebildet ist.

17. Anordnung nach Anspruch 1 bis 16, **dadurch gekennzeichnet, dass** die Ausnehmung (50) mit Hilfe eines Abstandshalters (145) gebildet ist, welcher eine geringere radiale Ausdehnung als der Endabschnitt (130) des Befestigungselements (125) aufweist.

18. Sicherheitssiegel zum Verhindern eines unbefugten Lösens eines Befestigungselements, insbesondere einer Befestigungsschraube, mittels einer Anordnung nach Anspruch 1.

19. Schutzeinrichtung um Verschleiß entgegenzuwirken mittels einer Anordnung nach Anspruch 1.

## Claims

1. An assembly for closing a bore (15) for a fastening element (125) disposed in a countersunk manner within the bore (15) wherein the bore (15) for receiving a closure element (5) or a closure unit (30) features a radially expanded end portion (100) and wherein at least one recess (45, 50) is radially introduced or formed in the area of the end portion (100), and the closure element(5) or the closure unit (30) engages with the recess (45, 50) via connecting means (40), wherein at least one recess (45, 50) for the closure element (5) or the closure unit (30) creates a stop in an axial direction, **characterized in that** the bore is disposed within a grinding chamber (160) of an agitator bead mill (55) and that the closure element (5) or the closure unit (30) is provided with a wear-resistant protective layer and/or a wear-resistant protective body (25, 95) at its open end.

2. The assembly as recited in claim 1, **characterised in that** the connecting means (40) are provided by one or a plurality of recesses (10) in the closure element (5) or in a sub-element (35) of the closure unit (30).

3. The assembly as recited in claim 1 or 2, **characterised in that** the closure element (5) or the closure unit (30) is flush with an opening surface (135).

4. The assembly as recited in claim 1 or 2, **characterised in that** the closure element (5) or the closure unit (30) protrudes beyond the opening surface (135).

5. The assembly as recited in claims 1 to 4, **characterised in that** the closure unit (30) is made up of several parts.

6. The assembly as recited in claims 1 to 5, **characterised in that** the closure unit (30) is made up of two parts.

7. The assembly as recited in claim 1, **characterised in that** the closure unit (30) is provided with a wear-resistant protective layer and/or a cap (95).

8. The assembly as recited in claim 7, **characterised in that** the cap (95) consists of a ceramic material.

9. The assembly as recited in claim 7 or 8, **characterised in that** the closure unit (30) comprises at least one sub-element (35), to which the cap (95) is connected formlocked and/or force-locked.

10. The assembly as recited in claim 9, **characterised in that** the cap (95) is connected to the sub-element (35) via a click connection.

11. The assembly as recited in claims 1 to 10, **characterised in that** the cap (5) or a sub-element (35) is provided with a cavity (20) that corresponds to the form of the end portion (130) of the fastening element (125).

12. The assembly as recited in claims 1 to 11, **characterised in that** the radial recess (45, 50) is formed by a peripherally introduced groove (45).

13. The assembly as recited in claims 1 to 12, **characterised in that** the groove (45) is introduced in the area of the end portion (130) of the fastening element (125) as viewed in axial direction of the bore (15).

14. The assembly as recited in claim 12 or 13, **characterised in that** the groove (45) as viewed in axial direction of the bore (15) ends, at its end side, the radially expanded end portion (100).

15. The assembly as recited in claims 1 to 14, **characterised in that** the fastening element (125) in the bore (15) has a radial recess (50) at the end.

16. The assembly as recited in claims 1 to 15, **characterised in that** the recess (50) is formed by means of a chamfer (70) created in the area of the end portion (130) of the fastening element (125) at its side that is facing away from the bore (15).

17. The assembly as recited in claims 1 to 16, **characterised in that** the recess (50) is formed with the aid of a spacer (145), whose radial expansion is smaller than that of the end portion (130) of the fastening element (125).

18. A safety seal for preventing unauthorized loosening of a fastening element, in particular a fastening screw, by means of an assembly as recited in claim 1.

19. A protective device to avoid wear by means of the assembly as recited in claim 1.

## Revendications

1. Ensemble de fermeture d'un perçage (15) pour un élément de fixation (125) disposé de manière noyée à l'intérieur du perçage (15), dans lequel le perçage (15) présente une portion d'extrémité (100) radialement élargie pour recevoir un élément de fermeture (5) ou une unité de fermeture (30), et dans lequel au moins un creux (45, 50) est ménagé ou formé radialement au niveau de la portion d'extrémité (100), et ledit élément de fermeture (5) ou ladite unité de fermeture (30) sont en prise avec ledit creux (45, 50) par l'intermédiaire de moyens de liaison (40), dans lequel au moins un creux (45, 50) provoque une butée dans la direction axiale pour l'élément de fermeture (5) ou l'unité de fermeture (30), **caractérisé par le fait que** le perçage est réalisé à l'intérieur d'une chambre de broyage (160) d'un broyeur-agitateur à boulets (55) et que l'élément de fermeture (5) ou l'unité de fermeture (30) est pourvu(e) côté ouverture d'une couche protectrice résistante à l'usure et/ou d'un corps de protection résistant à l'usure (25, 95).

2. Ensemble selon la revendication 1, **caractérisé par le fait que** les moyens de liaison (40) sont formés par un ou plusieurs creux (10) dans l'élément de fermeture (5) ou dans un élément partiel (35) de l'unité de fermeture (30).

3. Ensemble selon la revendication 1 ou 2, **caractérisé par le fait que** l'élément de fermeture (5) ou l'unité de fermeture (30) se termine de manière plane avec une surface d'ouverture (135).

4. Ensemble selon la revendication 1 ou 2, **caractérisé par le fait que** l'élément de fermeture (5) ou l'unité de fermeture (30) fait saillie au-delà de la surface d'ouverture (135).

5. Ensemble selon la revendication 1 à 4, **caractérisé par le fait que** l'unité de fermeture (30) est réalisée en plusieurs pièces.

6. Ensemble selon la revendication 1 à 5, **caractérisé par le fait que** l'unité de fermeture (30) est réalisée en deux pièces.

7. Ensemble selon la revendication 1, **caractérisé par le fait que** l'unité de fermeture (30) présente une couche protectrice résistante à l'usure et/ou un capuchon de fermeture (95).

8. Ensemble selon la revendication 7, **caractérisé par le fait que** le capuchon de fermeture (95) est réalisé dans une matière céramique.

9. Ensemble selon la revendication 7 ou 8, **caractérisé par le fait que** ladite unité de fermeture (30) comprend au moins un élément partiel (35) auquel ledit capuchon de fermeture (95) est relié à engagement positif et/ou par adhérence.

10. Ensemble selon la revendication 9, **caractérisé par le fait que** le capuchon de fermeture (95) est relié à l'élément partiel (35) par une liaison à encliquetage.

11. Ensemble selon la revendication 1 à 10, **caractérisé par le fait que** l'élément de fermeture (5) ou un élément partiel (35) est pourvu d'un évidement (20) correspondant à la forme de la portion d'extrémité (130) de l'élément de fixation (125).

12. Ensemble selon la revendication 1 à 11, **caractérisé par le fait que** ledit creux radial (45, 50) est formé par une rainure (45) ménagée circonférentiellement.

13. Ensemble selon la revendication 1 à 12, **caractérisé par le fait que**, vue dans la direction axiale du perçage (15), la rainure (45) est ménagée au niveau de la portion d'extrémité (130) de l'élément de fixation (125).

14. Ensemble selon la revendication 12 ou 13, **caractérisé par le fait que**, vue dans la direction axiale du perçage (15), la rainure (45) termine à l'extrémité la portion d'extrémité (100) radialement élargie.

15. Ensemble selon la revendication 1 à 14, **caractérisé par le fait que** l'élément de fixation (125) dans le perçage (15) présente un creux radial (50) à l'extrémité.

16. Ensemble selon la revendication 1 à 15, **caractérisé par le fait que** le creux (50) est formé au moyen d'un chanfrein (70) crée au niveau de la portion d'extrémité (130) de l'élément de fixation (125), sur son côté montrant dans la direction opposée au perçage (15).

17. Ensemble selon la revendication 1 à 16, **caractérisé par le fait que** le creux (50) est formé à l'aide d'un écarteur (145) qui présente une extension radiale inférieure à celle de la portion d'extrémité (130) de l'élément de fixation (125).

18. Sceau de sécurité destiné à empêcher un desserrage non autorisé d'un élément de fixation, en particulier d'une vis de fixation, par le biais d'un ensemble selon la revendication 1.

19. Dispositif de protection pour contrer l'usure par le biais d'un ensemble selon la revendication 1.
